(19) Europäisches Patentamt
European Patent Office
Office européen des brevets

(11) **EP 1 796 924 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(21) Anmeldenummer: 05792278.3

(22) Anmeldetag: **05.10.2005**

(51) Int Cl.:
**B60C 23/04** $^{(2006.01)}$

(86) Internationale Anmeldenummer:
**PCT/EP2005/054999**

(87) Internationale Veröffentlichungsnummer:
**WO 2006/037785 (13.04.2006 Gazette 2006/15)**

(54) **VERFAHREN ZUR REIFENDRUCKÜBERWACHUNG IN EINEM KRAFTFAHRZEUG**

METHOD FOR MONITORING THE TYRE PRESSURE IN A MOTOR VEHICLE

PROCEDE POUR CONTROLER LA PRESSION DES PNEUS DANS UNE AUTOMOBILE

(84) Benannte Vertragsstaaten:
**DE FR**

(30) Priorität: **05.10.2004 DE 102004049013**
**02.09.2005 DE 102005042061**

(43) Veröffentlichungstag der Anmeldung:
**20.06.2007 Patentblatt 2007/25**

(73) Patentinhaber: **Continental Teves AG & Co. oHG**
**60488 Frankfurt (DE)**

(72) Erfinder:
• **FENNEL, Helmut**
**65812 Bad Soden (DE)**
• **KOUKES, Vladimir**
**64297 Darmstadt (DE)**
• **GRIESSER, Martin**
**65760 Eschborn (DE)**
• **SÄGER, Peter**
**61381 Friedrichsdorf (DE)**

(74) Vertreter: **Brand, Markus**
**c/o Continental Teves AG & Co. oHG,**
**Guerickestrasse 7**
**60488 Frankfurt am Main (DE)**

(56) Entgegenhaltungen:
**WO-A-2004/054824    US-A1- 2003 227 380**
**US-A1- 2004 178 897**

**Beschreibung**

Die Erfindung betrifft ein Verfahren zur Reifendrucküberwachung in einem Kraftfahrzeug gemäß Oberbegriff von Anspruch 1. Ferner betrifft die Erfindung ein Computerprogrammprodukt gemäß Anspruch 9.

Eine zuverlässige Überwachung des Reifendrucks an allen Rädern eines Kraftfahrzeugs ist für die Sicherheit des Fahrzeuges von großer Bedeutung. Es existieren verschiedene Ansätze, wie die Reifendrucküberwachungssysteme realisiert werden können. Es gibt sogenannte direkt messende Reifendrucküberwachungssysteme, z. B. beschrieben in der Anmeldung DE 199 26 616 C2, welche mittels Drucksensoren in den einzelnen Reifen den jeweiligen Druck in dem zugehörigen Rad ermitteln. Solche Systeme überwachen den Reifendruck an allen Rädern unabhängig, aber sie sind relativ teuer, da sie zusätzliche Einrichtungen, z. B. zur Übertragung und Auswertung der Drucksensorinformationen benötigen.

Weiterhin sind sogenannte indirekt messende Reifendrucküberwachungssysteme z. B. aus der DE 100 58 140 A1 bekannt, welche aus Hilfsgrößen, z. B. durch Vergleich der Abrollumfänge der einzelnen Räder, einen Druckverlust ermitteln können. Solche Systeme sind zwar kostengünstig und zuverlässig, funktionieren aber nicht, wenn ein Druckverlust bei allen vier Reifen vorliegt.

Aus der DE 100 60 392 A1 ist ferner eine Reifendrucküberwachungseinrichtung bekannt, in welcher ein indirekt messendes Reifendrucküberwachungssystem mit einem direkt messenden Reifendrucküberwachungssystem kombiniert wird. Die in dieser Schrift beschriebene Reifendrucküberwachungseinrichtung soll durch die Kombination eines Reifendrucksensors mit dem indirekt messenden Reifendrucküberwachungssystem einen Luftdruckverlust an allen vier Rädern erkennen können. Nachteilig hierbei ist, das bei Verwendung nur eines Reifendrucksensors die Räder, an denen keine Reifendrucksensoren montiert sind, nur mit relativ großen Erkennungsschwellen überwacht werden können. Hierdurch wird ein Luftdruckverlust erst sehr spät bemerkt. Durch die in der Schrift genannte alternative Verwendung von zwei Reifendrucksensoren, wobei an jeder Fahrzeugachse genau ein Reifendrucksensor angeordnet ist, wird erreicht, dass für jede Achse individuelle Reifendrucksollwerte ermittelt werden können. Diese Maßnahme führt aber nicht zu einer wesentlich früheren Erkennung eines Luftdruckverlustes, da ein indirekt messendes Reifendrucküberwachungssystem auf Basis der Raddrehzahlen arbeitet, und damit direkt abhängig von dem Radabrollumfang ist, kann ein Druckverlust an den angetriebenen Rädern häufig nur sehr schlecht oder in seltenen Momenten des Freirollens erkannt werden. Auf der Offenbarung DE 100 60 392 A1 stützt sich der Oberbegriff des Anspruchs 1.

Daher besteht die Aufgabe der vorliegenden Erfindung darin, ein verbessertes Verfahren zur Reifendrucküberwachung in einem Kraftfahrzeug bereitzustellen, welches ein indirekt messendes Reifendrucküberwachungssystem (DDS) und ein direkt messendes Reifendrucküberwachungssystem (TPMS) mit lediglich zwei Drucksensoren aufweist.

Diese Aufgabe wird durch das erfindungsgemäße Verfahren gemäß Anspruch 1 gelöst.

Ein Vorteil der Erfindung besteht darin, dass das Verfahren zur Reifendrucküberwachung für eine beliebige Anordnung der Drucksensoren an den Fahrzeugrädern funktioniert. Hierzu ist wichtig, dass die Referenzwerte des indirekt messenden Reifendrucküberwachungssystems und das Modell für die Abhängigkeit der Referenzwerte von den Reifendrücken so miteinander verbunden werden, dass die Berechnungen zur Erkennung der Druckverluste eine hohe Genauigkeit aufweisen. Nur so ist eine rechtzeitige Erkennung von Druckverlusten, insbesondere von schleichenden Druckverlusten an mehreren Rädern, möglich.

In einer bevorzugten Ausführungsform des erfindungsgemäßen Verfahrens werden drei Referenzwerte (DIAG, SIDE und AXLE) aus den Radumlaufzeiten der einzelnen Räder gebildet.

Aus den drei Referenzwerten (DIAG, SIDE und AXLE) und den direkt gemessenen Druckwerten werden bevorzugt drei kompensierte Referenzwerte $\Delta D_{DIAGcomp}$, $\Delta D_{SIDEcomp}$ und $\Delta D_{AXLEcomp}$ zur Erkennung eines Reifendruckverlusts gebildet.

Weitere bevorzugte Ausführungsformen ergeben sich aus den Unteransprüchen. Die Erfindung wird anhand eines Ausführungsbeispiels beschrieben.

Das indirekt messende Reifendrucküberwachungssystem (DDS) erkennt einen Reifendruckverlust anhand einer Veränderung der Abrollumfänge bzw. der Radgeschwindigkeiten der Fahrzeugräder, wobei die Radgeschwindigkeiten mittels Raddrehzahlsensoren gemessen werden. Dieses indirekt messende Reifendrucküberwachungssystem (DDS) wird mit einem direkt messenden Reifendrucküberwachungssystem (TPMS) verknüpft, welches lediglich zwei Drucksensoren aufweist. Durch diese Kombination ist es möglich, dass alle Fahrzeugreifen sicher im Hinblick auf einen Reifendruckverlust überwacht werden können, ohne das hierzu ein vollständiges, d. h. mit vier Drucksensoren ausgerüstetes direkt messendes Reifendrucküberwachungssystem verwendet wird.

Das indirekt messende Reifendrucküberwachungssystem (DDS) verwendet für die Reifendruckkontrolle normalerweise dimensionslose Referenzwerte, welche aus den Raddrehzahlen bestimmt werden. Die Raddrehzahlen n sind von den Reifenabrollumfängen $A_j$ (j = 1, 2, 3, 4) und von der Fahrzeugsgeschwindigkeit V abhängig:

$$n = \frac{V}{A_j} \tag{1}$$

Ein beliebiger Referenzwert $D_i$ kann daher als eine Funktion F der Reifenabrollumfängen $A_j$ (j = 1, 2, 3, 4) ausgedrückt werden.

$$D_i = F(A_1, A_2, A_3, A_4) \tag{2}$$
$$i = 1, 2, 3$$

Da die Abrollumfänge $A_j$ (j = 1, 2, 3, 4) von den Reifendrücken P, und damit auch von den Änderungen der Reifendrücke $\Delta P_j$ (j = 1, 2, 3, 4) abhängig sind, kann auch der beliebige Referenzwert $D_i$ als Funktion $\Phi$ der Änderungen der Reifendrücke $\Delta P_j$ (j = 1, 2, 3, 4) geschrieben werden.

$$D_i = \Phi(\Delta P_1, \Delta P_2, \Delta P_3, \Delta P_4) \tag{3}$$
$$i = 1, 2, 3$$

Da es nicht möglich ist, mehr als drei unabhängige dimensionslose Werte von vier Raddrehzahlen zu bekommen, stehen nur drei Gleichungen für die vier unbekannten Reifenabrollumfänge bzw. Druckänderungen aus dem indirekt messenden Reifendrucküberwachungssystem (DDS) zur Verfügung. Daher werden zusätzlich noch zwei Drucksensoren eines direkt messenden Reifendrucküberwachungssystems (TPMS) ausgewertet, um einen Luftdruckverlust sicher erkennen zu können. Diese beiden Drucksensoren können hierbei beliebig in oder an den Fahrzeugreifen angeordnet sein. Die Drucksensoren können sich also an jeweils den beiden Rädern einer Achse (achsweise Anordnung) oder an jeweils einem Rad der Vorderachse und an einem Rad der Hinterachse befinden. Hierbei können die Drucksensoren an der linken oder der rechten Fahrzeugseite (seitenweise Anordnung) oder diagonal (diagonale Anordnung), z. B. ein Drucksensor am Rad vorne links und ein Drucksensor am Rad hinten rechts, am Fahrzeug angeordnet sein.

Der Abrollumfang A des Reifens ist in erster Näherung abhängig von der Summe des Grundabrollumfangs $A_0$ des Reifens und dem Produkt aus einem Proportionalitätsbeiwert k mit dem Reifendruck P. Der Grundabrollumfang $A_0$ beschreibt hierbei den Abrollumfang bei einem Reifendruck von P = 0.

$$A \approx A_0 + k \cdot P \tag{4}$$

Die relative Änderung des Abrollumfangs $\Delta A/A$ ist damit linear von der relativen Änderung des Drucks $\Delta P/P$ abhängig:

$$\Delta A / A \approx k \cdot \Delta P / P \tag{5}$$

Die Änderungen der drei Referenzwerte $\Delta D_i$ (i = 1, 2, 3) sind von den Drücken aller vier Räder $\delta P_j = \Delta P_j / P_j$ (j = 1, 2, 3, 4) abhängig:

$$\Delta D_i = f(\delta P_1, \delta P_2, \delta P_3, \delta P_4) \approx f_1(\delta P_1) + f_2(\delta P_2) + f_3(\delta P_3) + f_4(\delta P_4) \tag{6}$$

Die Funktionen $f_1$ bis $f_4$ sind in der ersten Näherung auch linear, deswegen ist es möglich, drei lineare Gleichungen für die Berechnung die Druckänderungen zu benutzen:

$$\Delta D_i \approx k_{i1} \cdot \delta P_1 + k_{i2} \cdot \delta P_2 + k_{i3} \cdot \delta P_3 + k_{i4} \cdot \delta P_4 = \prod_{j=1}^{4} k_{ij} \cdot \delta P_j \qquad (7)$$

$$i = 1,2,3$$

Die Beiwerte $k_{i1}$ bis $k_{i4}$ sind von den Reifeneigenschaften abhängig und müssen empirisch ermittelt werden. Wenn der Reifendruck in einem Rad direkt gemessen worden ist, so kann dieser Reifendruck in den drei Gleichungen 7 als eine bekannte Größe betrachtet werden. In diesem Fall bilden die drei linearen Gleichungen 7 ein bestimmtes System, was bedeutet, dass die Druckänderungen bei allen Rädern bestimmt (kontrolliert) werden können.

Wenn ein Reifendruckkontrollsystem M (M ≥ 1) direkt messende Drucksensoren aufweist, kann das System gemäß den Gleichungen 7 folgendermaßen überschrieben werden:

$$\Delta D_{icomp} = \Delta D_i - \prod_{j=1}^{M} k_{ij} \cdot \delta P_j = \prod_{j=1}^{4-M} k_{ij} \cdot \delta P_j$$

$$(8)$$

$$i = 1,2,3$$

Jeder kompensierte Referenzwert $\Delta D_{icomp}$ gemäß Gleichung 8 ist von (4 - M)-Reifendrücken in den Reifen ohne Drucksensoren abhängig. Um diese Reifendrücke zu berechnen, können nur (4 - M)-Gleichungen von dem System gemäß Gleichung 8 benutzt werden. Diese Gleichungen müssen linear unabhängig sein.

Weist das direkt messende Reifendrucküberwachungssystem (TPMS) zwei Drucksensoren auf, so sind die folgenden Anordnungen der zwei Drucksensoren am Fahrzeug bzw. an den Fahrzeugrädern möglich:

- Drucksensoren in diagonaler Anordnung
- Drucksensoren in achsweiser Anordnung
- Drucksensoren in seitenweiser Anordnung

Für jede der oben genannten Positionen der Drucksensoren wird einer der drei Referenzwerte (DIAG, SIDE, AXLE) als Hauptreferenzwert für die Überwachung ausgewählt. Die Referenzwerte (DIAG, SIDE, AXLE) setzen sich hierbei im wesentlichen aus den Radumlaufzeiten T der einzelnen Räder zusammen. Die Radumlaufzeiten T werden aus den Raddrehzahlen n der Räder bestimmt.

Für den Fall, dass die Drucksensoren auf der Fahrzeugsdiagonalen angeordnet sind, wird der Referenzwert DIAG als Hauptreferenzwert benutzt:

$$DIAG = \frac{T_{FL} + T_{RR}}{T_{FR} + T_{RL}} - 1$$

$$(9)$$

$$T = \frac{1}{n}$$

Die Indizes FL, FR, RL, RR entsprechen hierbei den Rädern vorne links (FL), vorne rechts (FR), hinten links (RL) und hinten rechts (RR).

Für den Fall, dass die Drucksensoren auf einer Fahrzeugsseite angeordnet sind, wird der Referenzwert SIDE als Hauptreferenzwert benutzt:

$$SIDE = \frac{T_{FL} + T_{RL}}{T_{FR} + T_{RR}} - 1 \qquad\qquad (10)$$

Für den Fall, dass die Drucksensoren auf einer Fahrzeugachse angeordnet sind, wird der Referenzwert AXLE als Hauptreferenzwert benutzt:

$$AXLE = \frac{T_{FL} + T_{FR}}{T_{RL} + T_{RR}} - 1 \qquad\qquad (11)$$

Zur Erkennung eines Reifendruckverlusts werden aus den Gleichungen 9 bis 11 unter Verwendung der Gleichung 8 drei kompensierte Referenzwerte $\Delta D_{DIAGcomp.}$ $\Delta D_{SIDEcomp}$ und $\Delta D_{AXLEcomp}$ mit $\Delta D_{DIAG}$=DIAG, $\Delta D_{SIDE}$=SIDE und $\Delta D_{AXLE}$=AXLE gebildet. Bei dem direkt messende Reifendrucküberwachungssystem (TPMS) mit zwei Drucksensoren gilt ferner, dass M=2 ist.

Eine Warnung hinsichtlich eines Reifendruckverlusts muss beispielsweise abgegeben werden, wenn eine oder mehrere Druckminderungen $\delta P_j$ eine bestimmte Schwelle (z. B. 25 %) überschreiten.

Für den als Hauptreferenzwert verwendeten Referenzwert (DIAG, SIDE, AXLE) werden zwei unterschiedlichen Schwellenwerte (kleiner Schwellenwert, großer Schwellenwert) für die Erkennung eines Reifendruckverlusts definiert. Diese Schwellenwerte werden empirisch ermittelt. Der große Schwellenwert ist hierbei beispielsweise doppelt so groß wie der kleine Schwellenwert. Wenn die Analyse aller drei kompensierten Referenzwerte ($\Delta D_{DIAGcomp.}$ $\Delta D_{SIDEcomp}$ und $\Delta D_{AXLEcomp}$) ergibt, dass der Druckverlust in einem Fahrzugsreifen stattfindet, so wird eine Warnung hinsichtlich eines Reifendruckverlusts abgegeben, wenn der Hauptreferenzwert (DIAG, SIDE oder AXLE) den kleinen Schwellenwert für diesen Hauptreferenzwert überschreitet. Wenn die Analyse zeigt, dass der Druckverlust in zwei Fahrzeugsreifen ohne Drucksensoren stattfindet, dann wird eine Warnung hinsichtlich eines Reifendruckverlusts gegeben, wenn der Hauptreferenzwert den großen Schwellenwert überschreitet. Wird ein Druckverlust durch einen Drucksensor an einem Rad erkannt, so erfolgt die Warnung hinsichtlich eines Reifendruckverlusts, wenn eine bestimmte Schwelle (z. B. Druckverlust größer als 25 %) überschritten wird. Dieser Druckverlust kann auch noch durch das obige Verfahren überprüft werden, um z. B. einen Defekt eines Drucksensors ausschließen zu können.

Mittels eines vereinfachten linearen Modells können die Reifendruckänderungen des Systems gemäß Gleichung 8 ermittelt werden.

**Patentansprüche**

1. Verfahren zur Reifendrucküberwachung in einem Kraftfahrzeug, bei dem ein indirekt messendes Reifendrucküberwachungssystem und ein direkt messendes Reifendrucküberwachungssystems mit zwei Drucksensoren zur Bestimmung eines Reifendrucks und/oder eines Reifendruckverlusts verwendet wird, **dadurch gekennzeichnet, dass** abhängig von der Anordnung der Drucksensoren an den Fahrzeugrädern ein Referenzwert des indirekt messenden Reifendrucküberwachungssystems als Hauptreferenzwert zur Erkennung eines Reifenluftdruckverlusts verwendet wird.

2. Verfahren nach Anspruch 1, **dadurch gekennzeichnet, dass** der Referenzwert DIAG als Hauptreferenzwert verwendet wird, wenn jeweils ein Drucksensor an dem Rad vorne links und dem Rad hinten rechts, oder an dem Rad vorne rechts und dem Rad hinten links angeordnet ist.

3. Verfahren nach Anspruch 1, **dadurch gekennzeichnet, dass** der Referenzwert SIDE als Hauptreferenzwert verwendet wird, wenn jeweils ein Drucksensor an dem Rad vorne links und dem Rad hinten links, oder an dem Rad vorne rechts und dem Rad hinten rechts angeordnet ist.

4. Verfahren nach Anspruch 1, **dadurch gekennzeichnet, dass** der Referenzwert AXLE als Hauptreferenzwert verwendet wird, wenn jeweils ein Drucksensor an dem Rad vorne links und dem Rad vorne rechts, oder an dem Rad hinten rechts und dem Rad hinten links angeordnet ist.

**5.** Verfahren nach einem der Ansprüche 2 bis 4, **dadurch gekennzeichnet, dass** zwei unterschiedlich große, empirisch ermittelte Schwellenwerte für den Hauptreferenzwert zur Erkennung eines Reifendruckverlusts verwendet werden.

**6.** Verfahren nach einem der Ansprüche 2 bis 4, **dadurch gekennzeichnet, dass** drei kompensierte Referenzwerte zur Erkennung eines Reifendruckverlusts aus den Referenzwerten gebildet werden, wobei die Kompensation jeweils mittels einer linearen Funktion erfolgt.

**7.** Verfahren nach den Ansprüchen 5 und 6, **dadurch gekennzeichnet, dass** ein Reifendruckverlust erkannt wird, wenn alle drei kompensierten Referenzwerte einen Fahrzeugreifen als Reifen mit Druckverlust ausweisen, und wen der Hauptreferenzwert den kleinen Schwellenwert überschreitet.

**8.** Verfahren nach den Ansprüchen 5 und 6, **dadurch gekennzeichnet, dass** ein Reifendruckverlust an zwei Fahrzeugreifen ohne Drucksensoren erkannt wird, wenn der Hauptreferenzwert den großen Schwellenwert überschreitet.

**9.** Computerprogrammprodukt, **dadurch gekennzeichnet, dass** dieses einen Algorithmus definiert, welcher ein Verfahren gemäß mindestens einem der Ansprüche 1 bis 8 umfasst.

**Claims**

**1.** Method for monitoring the tyre pressure in a motor vehicle, in which an indirectly measuring tyre pressure monitoring system and a directly measuring tyre pressure monitoring system with two pressure sensors for determining a tyre pressure and/or a loss of tyre pressure are used,
**characterized in that** a reference value of the indirectly measuring tyre pressure monitoring system is used as a main reference value for detecting a loss of tyre pressure as a function of the arrangement of the pressure sensors on the vehicle wheels.

**2.** Method according to Claim 1, **characterized in that** the reference value DIAG is used as a main reference value if a pressure sensor is arranged on the front left-hand wheel and a pressure sensor is arranged on the rear right-hand wheel, or respectively a pressure sensor is arranged on the front right-hand wheel and a pressure sensor is arranged on the rear left-hand wheel.

**3.** Method according to Claim 1, **characterized in that** the reference value SIDE is used as a main reference value if a pressure sensor is arranged on the front left-hand wheel and a pressure sensor is arranged on the rear left-hand wheel, or respectively a pressure sensor is arranged on the front right-hand wheel and a pressure sensor is arranged on the rear right-hand wheel.

**4.** Method according to Claim 1, **characterized in that** the reference value AXLE is used as a main reference value if a pressure sensor is arranged on the front left-hand wheel and a pressure sensor is arranged on the front right-hand wheel, or respectively a pressure sensor is arranged on the rear right-hand wheel and a pressure sensor is arranged on the rear left-hand wheel.

**5.** Method according to one of Claims 2 to 4, **characterized in that** two empirically determined threshold values of different sizes are used for the main reference value for detecting a loss of tyre pressure.

**6.** Method according to one of Claims 2 to 4, **characterized in that** three compensated reference values are formed for detecting a loss of tyre pressure from the reference values, wherein compensation is carried out in each case by means of a linear function.

**7.** Method according to Claims 5 and 6, **characterized in that** a loss of tyre pressure is detected if all three compensated reference values indicate a vehicle tyre as a tyre with a pressure loss, and if the main reference value exceeds the small threshold value.

**8.** Method according to Claims 5 and 6, **characterized in that** a loss of tyre pressure is detected at two vehicle tyres without pressure sensors if the main reference value exceeds the large threshold value.

**9.** Computer program product, **characterized in that** the latter defines an algorithm which comprises a method according to at least one of Claims 1 to 8.

**Revendications**

1.  Procédé de surveillance de la pression des bandages de roues dans un véhicule automobile qui utilise un système de surveillance de la pression des bandages de roue à mesure indirecte et un système de surveillance de la pression des bandages de roue à mesure directe doté de deux sondes de pression pour déterminer la pression des bandages de roue et/ou une perte de pression des bandages de roue,
    **caractérisé en ce que**
    en fonction de l'agencement des sondes de pression sur les roues du véhicule, une valeur de référence du système de surveillance de la pression des bandages de roue à mesure indirecte est utilisée comme valeur principale de référence pour détecter une perte de pression d'air dans un bandage de roue.

2.  Procédé selon la revendication 1, **caractérisé en ce que** la valeur de référence DIAG est utilisée comme valeur principale de référence lorsqu'une sonde de pression est disposée sur la roue avant gauche et la roue arrière droite ou sur la roue avant droite et la roue arrière gauche.

3.  Procédé selon la revendication 1, **caractérisé en ce que** la valeur de référence SIDE est utilisée comme valeur principale de référence lorsqu'une sonde de pression est disposée sur la roue avant gauche et sur la roue arrière droite ou sur la roue avant droite et sur la roue arrière gauche.

4.  Procédé selon la revendication 1, **caractérisé en ce que** la valeur de référence AXLE est utilisée comme valeur principale de référence si une sonde de pression est disposée sur la roue avant gauche et la roue avant droite ou sur la roue arrière droite et sur la roue arrière gauche.

5.  Procédé selon l'une des revendications 2 à 4, **caractérisé en ce que** deux valeurs de seuil de niveaux différents, déterminées empiriquement, sont utilisées comme valeurs principales de référence pour détecter une perte de pression dans un bandage de roue.

6.  Procédé selon l'une des revendications 2 à 4, **caractérisé en ce que** trois valeurs compensées de référence sont formées pour détecter une perte de pression dans un bandage de roue à partir des valeurs de référence, la compensation s'effectuant chaque fois au moyen d'une fonction linéaire.

7.  Procédé selon les revendications 5 et 6, **caractérisé en ce qu'**une perte de pression dans un bandage de roue est détectée lorsque les trois valeurs de référence compensées présentent un bandage de roue du véhicule comme bandage de roue présentant une perte de pression et si la valeur principale de référence dépasse la petite valeur de seuil.

8.  Procédé selon les revendications 5 et 6, **caractérisé en ce qu'**une perte de pression dans un bandage de roue est détectée sur deux bandages de roue du véhicule non dotés de sondes de pression si la valeur principale de référence dépasse la grande valeur de seuil.

9.  Produit de programme informatique **caractérisé en ce qu'**il définit un algorithme qui comporte un procédé selon au moins l'une des revendications 1 à 8.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19926616 C2
- DE 10058140 A1
- DE 10060392 A1